(19)

**Europäisches Patentamt**

**European Patent Office**

**Office européen des brevets**

(11) **EP 1 558 860 B1**

(12) **EUROPÄISCHE PATENTSCHRIFT**

(45) Veröffentlichungstag und Bekanntmachung des Hinweises auf die Patenterteilung:
**30.08.2006 Patentblatt 2006/35**

(51) Int Cl.:
*F16H 41/24* *(2006.01)*  *F16H 45/02* *(2006.01)*
*F16D 33/20* *(2006.01)*

(21) Anmeldenummer: **03769458.5**

(22) Anmeldetag: **27.10.2003**

(86) Internationale Anmeldenummer:
**PCT/EP2003/011891**

(87) Internationale Veröffentlichungsnummer:
**WO 2004/042255 (21.05.2004 Gazette 2004/21)**

(54) **HYDRODYNAMISCHE KUPPLUNG UND ANFAHREINHEIT**

HYDRODYNAMIC CLUTCH AND A START UNIT

EMBRAYAGE HYDRODYNAMIQUE ET UNITE DE DEMARRAGE

(84) Benannte Vertragsstaaten:
**DE**

(30) Priorität: **08.11.2002 DE 10251969**

(43) Veröffentlichungstag der Anmeldung:
**03.08.2005 Patentblatt 2005/31**

(73) Patentinhaber: **Voith Turbo GmbH & Co. KG**
**89522 Heidenheim (DE)**

(72) Erfinder: **MENNE, Achim**
**74564 Crailsheim (DE)**

(74) Vertreter: **Dr. Weitzel & Partner**
**Friedenstrasse 10**
**89522 Heidenheim (DE)**

(56) Entgegenhaltungen:
**EP-A- 0 070 662**     **EP-A- 1 099 879**
**EP-A- 1 184 600**     **US-A- 4 044 556**

**Beschreibung**

Die Erfindung betrifft eine hydrodynamische Kupplung, im Einzelnen mit den Merkmalen aus dem Oberbegriff des Anspruchs 1; ferner eine Anfahreinheit mit einer erfindungsgemäßen hydrodynamischen Kupplung.

Getriebe ist für den Einsatz in Fahrzeugen, insbesondere in Form von Schaltgetrieben, automatisierten Schaltgetrieben oder Automatikgetrieben in einer Vielzahl von Ausführungen bekannt. Diesen gemeinsam ist, dass der Anfahrvorgang über ein hydrodynamisches Bauelement, einen hydrodynamischen Drehzaht-/Drehmomentwandler oder eine hydrodynamische Kupplung erfolgt. Bei Ausführung als hydrodynamische Kupplung umfasst diese ein als Pumpenrad fungierendes Primärrad und ein als Turbinenrad fungierendes Sekundärrad, die miteinander einen torusförmigen Arbeitsraum bilden, der mit Betriebsmitteln befüllbar ist. Die hydrodynamische Kupplung dient dabei lediglich der Drehzahlwandlung und ist frei von einem Leitrad. Aufgrund der Eigenschaft dieses Bauelementes, lediglich in einem bestimmten Betriebsbereich des Gesamtbetriebsbereiches des Fahrzeuges mit einem optimalen beziehungsweise vertretbaren Wirkungsgrad betreibbar zu sein, wird die mechanische Durchkupplung beziehungsweise Umgehung des hydrodynamischen Leistungszweiges angestrebt. Diese erfolgt in der Regel über eine sogenannte Überbrückungskupplung, welche eine Triebverbindung zwischen dem Eingang der Anfahreinheit und einem Ausgang der Anfahreinheit unter Umgehung des hydrodynamischen Leistungszweiges ermöglicht. Dabei kann die Überbrückungskupplung als schaltbare Kupplung in Form einer Lamellenkupplung parallel zum hydrodynamischen Bauelement angeordnet und geschaltet werden. Denkbar sind jedoch auch Ausführungen, bei welchen die Leistungsübertragung gleichzeitig sowohl über die hydrodynamische Kupplung als auch die Überbrückungskupplung bei Leistungsaufteilung erfolgt. Eine derartige Ausführung ist beispielsweise aus der Druckschrift WO 02/18817 vorbekannt. Entsprechend der gewünschten übertragbaren Leistung wird dabei die hydrodynamische Kupplung ausgelegt. Ferner bekannt aus dieser Druckschrift ist die zumindest zeitweise zentripetale Durchströmung der hydrodynamischen Kupplung während ihres Betriebes. Das Primärrad ist dabei drehfest mit einer mitrotierenden Primärradschale verbunden, welche das Sekundärrad in axialer Richtung und wenigstens teilweise in radialer Richtung umschließt. Der so gebildete Zwischenraum fungiert als erster Betriebsmittelführungskanal oder -raum, der den Anschluss für den Zulauf von Betriebsmittel bildet oder mit einem derartigen Anschluss gekoppelt ist. Das Betriebsmittel wird dabei um das Sekundärrad herumgeführt und die Befüllung erfolgt im Bereich des radial äußeren Durchmessers der hydrodynamischen Kupplung innen zwischen Primärrad und Sekundärrad gebildeten Spalt von oben in radialer Richtung nach innen. Zum Ablauf ist der hydrodynamischen Kupplung im radial inneren Bereich, das heißt im Bereich der Trennebene und im Bereich des inneren Durchmessers des torusförmigen Arbeitsraumes oder unterhalb von diesem ein weiterer zweiten Betriebsmittelführungskanal oder - raum zugeordnet, der den Anschluss für den Ablauf bildet oder mit diesem gekoppelt ist. Die Verbindung zwischen den beiden Betriebsmittelführungskanälen oder -räumen erfolgt dabei über einen offenen Kreislauf. Vorzugsweise sind die Anschlüsse hinsichtlich ihrer Funktion auch vertauschbar, das heißt diese können auch die jeweils andere Funktion übernehmen und damit eine Änderung der Durchströmungsrichtung erzeugen. Insbesondere für die zentripetale Durchströmung ist dabei der dafür erforderliche Bauraum in radialer Richtung mit vorzusehen. Dies ist ebenfalls bei der Auslegung der Kupplung zu beachten. Beim Einsatz in Getriebebaueinheiten, insbesondere in Fahrzeugen ist jedoch auch den zunehmend erhöhten Anforderungen an den zur Verfügung stehenden Bauraum Rechnung zu tragen. Dies bedeutet, dass alle Leistung übertragenden Komponenten möglichst wenig Bauraum in axialer Richtung benötigen sollten. Dies gilt auch für die hydrodynamische Komponente, die in der Regel nur in einem schmalen Teilbereich des Gesamtarbeitsbereiches zum Einsatz gelangt. Eine Verringerung der axialen Baulänge kann dabei durch Vergrößerung der radialen Abmessungen und damit Verringerung der Kreislaufbreite erfolgen, allerdings sind dieser Möglichkeit Grenzen bei gewünschter zentripetaler Durchströmung gesetzt. Auch wirkt sich diese Maßnahme als alleinige Maßnahme im Schlunf/Momentenkennfeld nur auf die Größe des theoretisch übertragbaren Momentes bei hohen Schlupfwerten positiv aus.

Der Erfindung liegt daher die Aufgabe zugrunde, eine hydrodynamische Kupplung der eingangs genannten Art derart weiterzuentwickeln, dass diese unter Beibehaltung eines optimalen Übertragungsverhaltens über ihren Gesamtbetriebsbereich hinsichtlich ihrer benötigten Baugröße in axialer Richtung optimiert wird, wobei auch die anderen Funktionen in ausreichender Art und Weise gewährleistet werden.

Die erfindungsgemäße Lösung wird durch die Merkmale des Anspruches 1 charakterisiert. Vorteilhafte Ausgestaltungen sind in den Unteransprüchen wiedergegeben.

Erfindungsgemäß erfolgt die konstruktive Auslegung einer hydrodynamischen Kupplung, umfassend ein Primärrad und ein Sekundärrad, die miteinander einen mit Betriebsmittel befüllbaren torusförmigen Arbeitsraum bilden, derart, dass nachfolgend genannte Parameterbereiche eingehalten werden:

- $0{,}13 \leq B / D_P \leq 0{,}2$ für das Verhältnis der Breite B des torusförmigen Arbeitsraumes (4) im Axialschnitt zum Außendurchmesser des torusförmigen Arbeitsraumes $D_P$ am Primärrad;
- $0{,}6 \leq d_P / D_P \leq 0{,}7$ für das Verhältnis des Innendurchmessers des torusförmigen Arbeitsraumes $d_P$ am Primärrad zum Außendurchmesser $D_P$ des torusförmigen Arbeitsraumes (4) am Primärrad;
- $230\,mm \leq D_P \leq 280\,mm$ für den Außendurchmesser $D_P$ des torusförmigen Arbeitsraumes am Primärrad.

mit

D$_P$- Außendurchmesser des torusförmigen Arbeitsraumes am Primärrad (entspricht in radialer Richtung betrachtet dem größten äußeren Durchmesser des Arbeitsraumes am Primärrad)

d$_P$- Innendurchmesser des torusförmigen Arbeitsraumes am Primärrad (entspricht in radialer Richtung betrachtet dem kleinsten, den Arbeitsraum charakterisierenden Durchmesser am Primärrad, wobei dieser im Bereich der Trennebene zwischen Primärrad und Sekundärrad angeordnet ist)

B - Breite des von Primärrad und Sekundärrad gebildeten torsionsförmigen Arbeitsraumes im Axialschnitt (entspricht der größtmöglichen Abmessung der torusförmigen Arbeitsraumes in axialer Richtung)

Die erfindungsgemäße Lösung ermöglicht eine Optimierung der hydrodynamischen Kupplung in Richtung einer kleineren Kreislaufbreite und damit geringerer axial benötigter Baubreite. Dabei sind die Anschlussmöglichkeiten an eine Getriebebaueinheit nach wie vor in optimaler Weise aufgrund des gewählten Innendurchmessers gegeben. Der mit dieser Auslegung erzielbare Kreislauf ist trotz der Streckung immer noch relativ füllig und gewährleistet ein optimales Übertragungsverhalten über den gesamten Arbeitsbereich der Kupplung und die Übertragbarkeit sehr hoher Momente. Ferner ist diese Kreislaufauslegung auch für Ausführungen mit zentripetaler Durchströmung und Druckauslasssteuerung geeignet.

Gemäß einer besonders vorteilhaften Ausgestaltung wird dabei das Verhältnis B/D$_P$ derart gewählt, dass dieses immer $\leq ((1 - d_P/D_P)/2)$ ist.

Um auch eine optimale Zufuhr des Betriebsmittels bei zentripetaler Durchstömung, das heißt Führung des Betriebsmittels um den Außenumfang eines der Schaufelräder, vorzugsweise des Sekundärrades zum radial äußeren Bereich der Schaufelräder in den Bereich der Trennebene bzw. den Spalt zwischen Primärrad und Sekundärrad und von dort in den sich im torusförmigen Arbeitsraum bildenden Arbeitskreislauf, zu gewährleisten, ist es erforderlich, Pumpenrad und Turbinenrad in entsprechender Art und Weise zueinander anzuordnen und den Spalt zwischen ihnen so zu gestalten, dass der dabei gebildete Eintrittswinkel immer eine Zufuhr in die Meridianströmung des Arbeitskreislaufes bewirkt und nicht abströmend wirkt. Dazu sind Primärrad und Sekundärrad in radialer Richtung mit Versatz ausgeführt, wodurch sich eine entsprechende Profilüberdeckung der Beschaufelung ergibt. Diese Profilüberdeckung ist dabei dadurch charakterisiert, dass der äußere Durchmesser Dp des torusförmigen Arbeitsraumes am Primärrad kleiner als der äußere Durchmesser D$_T$ des torusförmigen Arbeitsraumes am Sekundärrad ist. Vorzugsweise wird eine Profilüberdeckung gewählt, die durch folgende Beziehungen beschreibbar ist:

$$100\%D_P < D_T \leq 103\%D_P \quad \text{und} \quad 100\%d_P < d_t \leq 103\%d_P.$$

Die Beschaufelung der Kupplung kann gerade oder mit Schrägstellung erfolgen. Vorzugsweise sind die Schaufelwinkel beider Räder gleich. Gemäß einer vorteilhaften Weiterentwicklung sind wenigstens ein Teil, vorzugsweise alle Schaufeln der Schaufelräder im Bereich ihres Schaufelendes unter Bildung einer Anspitzfläche angefast, wobei der Fasenwinkel $\beta_P$ am Primärrad dem Fasenwinkel $\beta_T$ am Sekundärrad entspricht und die Phase am Primärrad an der Schaufelrückseite und am Sekundärrad an der Schaufelvorderseite in Rotationsrichtung betrachtet ausgebildet ist.

Zur Vermeidung von Unstetigkeiten in der Momentenübertragung im Teilfüllungsbereich werden die einzelnen Schaufeln der Beschaufelung eines Schaufelrades in Umfangsrichtung in ungleichen Winkelabständen zwischen zwei zueinander in Umfangsrichtung benachbarten Schaufeln angeordnet.

Eine weitere mögliche ausgestaltung ist durch das Vorsehen einer Drosselscheibe zur Beeinflussung des Übertragungsverhaltens charakterisiert. Diese ist einem der beiden Schaufelräder - Primärrad oder Sekundärrad - im Bereich des Innendurchmessers des torusförmigen Arbeitsraumes zugeordnet. Die Auslegung der Drosselscheibe erfolgt entsprechend der Beziehung $1 < ((D_P - d_P) / (D_P - d_d)) \leq 1,25$.

Die hydrodynamische Kupplung ist als Anfahrelement in Anfahreinheiten einsetzbar. Dieser ist dann ein schaltbare Kupplung in Form einer Überbrückungskupplung zur mechanischen Durchkopplung von Primärrad und Sekundärrad zugeordnet. Beide können dabei entweder nur getrennt oder aber sowohl getrennt als auch gemeinsam schaltbar sein. Einsatzmöglichkeiten ergeben sich dabei insbesondere in Antriebssträngen von Fahrzeugen. Die Anfahreinheit kann dabei als vormontierte und selbständig handelbare modulare Baugruppe ausgeführt werden, wobei diese mit weiteren Drehzahl/Drehmomentwandlungseinrichtungen zu einer Getriebebaueinheit zusammengefasst wird. Eine andere Möglichkeit besteht in der Einzelintegration in einem Getriebe.

Die erfindungsgemäße Lösung wird nachfolgend anhand von Figuren erläutert. Darin ist im Einzelnen Folgendes dargestellt:

Figuren 1a    verdeutlicht in schematisch vereinfachter Darstellung anhand eines Axialschnittes den Grundaufbau einer erfindungsgemäß gestalteten hydrodynamischen Kupplung unter Angabe der Parameter;

Figur 2    verdeutlicht eine besonders vorteilhafte Anwendung der erfindungsgemäß gestalteten hydrodynamischen Kupplung;

Figur 3    verdeutlicht anhand einer Schnittdarstellung durch die Schaufelräder in abgewinkelter Form die Ausführung der Beschaufelung;

Figur 4    verdeutlicht anhand eines Drehzahlverhältnis-/Drehmoment-Diagramms ($n_T$/$n_P$) das Leistungsübertragungsverhalten der hydrodynamischen Kupplung.

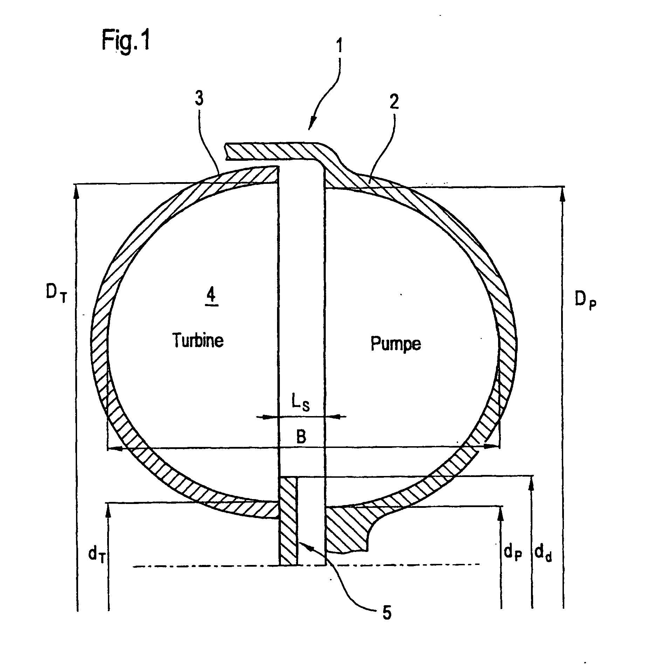

Die Figur 1 verdeutlicht in schematisch stark vereinfachter Darstellung anhand eines Ausschnittes aus einem Axialschnitt einer hydrodynamische Kupplung 1 die einzelnen Parameter zur erfindungsgemäßen Auslegung des hydrodynamischen Kreislaufes. Die hydrodynamische Kupplung 1 umfasst ein als Pumpenrad fungierendes Primärrad 2 und ein als Turbinenrad fungierendes Sekundärrad 3, die miteinander einen mit Betriebsmittel befüllbaren torusförmigen Arbeitsraum 4 bilden. Das Primärrad 2 ist dabei beim Einsatz in Antriebssträngen mit einem Antrieb drehfest verbindbar, während das Sekundärrad 3 beim Einsatz in Antriebssträngen mit dem in der Regel anzutreibenden Abtrieb wenigstens mittelbar, das heißt direkt oder indirekt über weitere Übertragungselemente koppelbar ist. Im Betrieb der hydrodynamischen Kupplung 1 bildet sich bei Rotation des Primärrades 2 aufgrund der sich dadurch ergebenden Umwälzung des Betriebsmittels im torusförmigen Arbeitsraum 4 ein Arbeitskreislauf ein. Um mit einem derartigen Kreislauf ein optimales Übertragungsverhalten zu gewährleisten, erfolgt die Auslegung der hydrodynamischen Kupplung in den nachfolgend genannten Parameterbereichen:

$B/T_P$:      $0{,}13 \le B/D_P \le 0{,}2$
$d_P/D_P$:      $0{,}6 \le d_P/D_P \le 0{,}7$
$D_P$:      $230 \text{ mm} \le D_P \le 280 \text{ mm}$
        mit

$D_P$ -    Außendurchmesser des torusförmigen Arbeitsraumes am Primärrad (entspricht in radialer Richtung betrachtet dem größten äußeren Durchmesser des Arbeitsraumes am Primärrad)

$d_P$-    Innendurchmesser des torusförmigen Arbeitsraumes am Primärrad (entspricht in radialer Richtung betrachtet dem kleinsten, den Arbeitsraum charakterisierenden Durchmesser am Primärrad, wobei dieser im Bereich der Trennebene zwischen Primärrad und Sekundärrad angeordnet ist)

$B$ -    Breite des von Primärrad und Sekundärrad gebildeten torsionsförmigen Arbeitsraumes im Axialschnitt (entspricht der größtmöglichen Abmessung der torusförmigen Arbeitsraumes in axialer Richtung)

Gemäß einer besonders vorteilhaften Ausgestaltung wird dabei das Verhältnis $B/D_P$ derart gewählt, dass dieses immer $\le ((1 - d_P/D_P)/2)$ ist. Die hydrodynamische Kupplung gemäß Figur 1 kann ferner durch folgende weitere Parameter beschrieben werden:

$D_T$ -    Außendurchmesser des torusförmigen Arbeitsraumes im Sekundärrad, das heißt Turbinenrad

$d_T$ -    Innendurchmesser des torusförmigen Arbeitsraumes am Sekundärrad, insbesondere Turbinenrad

$I_S$ -    Spaltbreite zwischen Primärrad und Sekundärrad im Einbauzustand

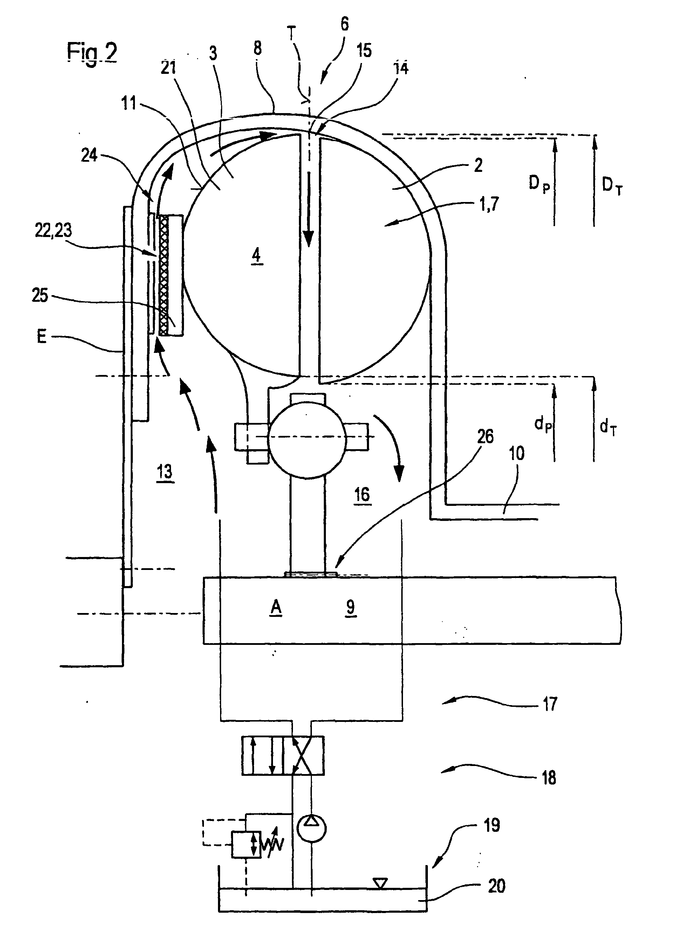

Beim optionalen Einbau einer Drosselscheibe 5 zur weiteren Beeinflussung der theoretisch mit der erfindungsgemäßen Auslegung erzielbaren Kupplungskennlinie kann diese entweder vor dem Primärrad 2 oder dem Sekundärrad 3 angeordnet werden. Im dargestellten Fall erfolgt die Anordnung vor dem Sekundärrad 3 Der auf den Strömungskreislauf im torusförmigen Arbeitsraum 4 wirkende Teil der Drosselscheibe 5 ist dabei durch den Außendurchmesser $d_d$ charakterisiert. Dabei stellt die Figur 1 mit der Anordnung der Drosselscheibe 5 vor dem Sekundärrad 3 eine Ausgestaltung dar, die für den Einsatz der hydrodynamischen Kupplung 1 in Anwendungsfällen mit zentripetaler Durchströmung, wie in der Figur 2 anhand eines besonders vorteilhaften Ausführungsbeispieles dargestellt, geeignet ist.
Die Figur 2 verdeutlicht eine bevorzugte Anwendung einer erfindungsgemäß gestalteten Ausführung einer hydrodynamischen Kupplung 1 in einer Anfahreinheit 6. Diese umfasst die hydrodynamische Kupplung 1 als Anfahrelement 7. Das Primärrad 2 ist dabei drehfest mit einer Primärradschale 8 gekoppelt, welche das Sekundärrad 3 in axialer Richtung und wenigstens teilweise in radialer Richtung umschließt. Über die Primärradschale 8 ist das Primärrad 2 dabei mit einem Antrieb oder einer Antriebsmaschine gekoppelt. Die Primärradschale 8 bildet dabei den Eingang E der Anfahreinheit 6. Der Ausgang A, welcher mit nachgeschalteten Drehzahl-/Drehmomentwandlungseinrichtungen oder anderen Übertragungselementen gekoppelt ist, wird vom Sekundärrad 3 oder einem mit diesem drehfest gekoppelten Übertragungselement, beispielsweise in Form einer Sekundärradwelle 9 gebildet. Dabei ist in Einbaulage betrachtet das Primärrad 2 in axialer Richtung von Eingang E zum Ausgang A betrachtet hinter dem Sekundärrad 3 angeordnet. Die Sekundärradwelle 9 beziehungsweise das ansonsten mit dem Sekundärrad 3 drehfest gekoppelte Übertragungselement wird dabei durch das Primärrad 2, insbesondere den von diesem gebildeten Kupplungshals 10 beziehungsweise einer als Hohlwelle ausgebildeten Primärradwelle geführt.

Die Primärradschale 8 umschließt dabei das Sekundärrad 3 derart, dass zwischen dem Außenumfang 11 des Sekundärrades 3 und der durch die Innenkontur, insbesondere die Innenwand 12 der Primärradschale 8 mindestens ein Betriebsmittelführungskanal oder -raum 13 gebildet wird. Dieser soll dabei eine Strömung des Betriebsmittels zwischen dem Sekundärrad 2 und der Primärradschale 8 im Bereich der radial äußeren Abmessungen 14 der hydrodynamischen Kupplung 1, insbesondere des Primärrades 2 und des Sekundärrades 3 im Bereich der Trennebene T zwischen beiden von oben in Richtung des sich im torusförmigen Arbeitsraum 4 einstellenden Arbeitskreislaufes in diesen ermöglichen und eine zentripetale Durchströmung der hydrodynamischen Kupplung gewährleisten. Dies bedeutet, dass die Befüllung durch Führung des Betriebsmittels um den Außenumfang eines der Schaufelräder, hier des Sekundärrades 3 zum äußeren Durchmesser der hydrodynamischen Kupplung 1, insbesondere im Bereich der Trennebene zum äußeren Durchmesser des Sekundärrades 3 erfolgt und das Betriebsmittel in diesem Bereich in radialer Richtung nach innen in den torusförmigen Arbeitsraum 4 eingebracht wird. Die Entleerung erfolgt im Bereich des Innendurchmessers $d_4$ des torusförmigen Arbeitsraumes, beispielsweise im Bereich der Trennebene T zwischen den beiden Schaufelrädern, das heißt im Spalt 15. Dazu ist der hydrodynamischen Kupplung 1 ein weiterer Betriebsmittelführungskanal oder -raum 16 zugeordnet, der im radial inneren Bereich der hydrodynamischen Kupplung 1 angeordnet ist und sich entweder direkt oder über entsprechende Kanäle bis zum torusförmigen Arbeitsraum 4 hin erstreckt. Bei einem Betriebsmittelführungskanal oder -raum kann es sich dabei um eine Leitung oder speziell in der Anschlusskonstruktion ausgebildete und eingearbeitete Kanäle handeln. Der Begriff Kanal ist dabei hinsichtlich seiner Funktion zu verstehen und kann auch Innenräume oder kombinierte Kanal- und Raumabschnitte mit einschließen. Insbesondere der mit 13 bezeichnete Betriebsmittelführungskanal oder -raum liegt hier als ringförmiger Betriebsmittelführungsraum vor. Die beiden Betriebsmittelführungskanäle- oder Räume 13 und 16 sind über einen offenen Kreislauf 17 miteinander gekoppelt. Der offene Kreislauf 17 ist dabei dem im torusförmigen Arbeitsraum sich während des Betriebes einstellenden geschlossenen Kreislauf zugeordnet und ermöglicht entsprechend der vorgenommenen Ansteuerung eine Abfuhr von Betriebsmittel aus dem torusförmigen Arbeitsraum und eine Zufuhr zu diesem.

Vorzugsweise wird dabei die hydrodynamische Kupplung 1 mit Druckauslasssteuerung betrieben. Dies bedeutet, dass der Druck im zweiten Betriebsmittelführungskanal oder -raum 16 aktiv beeinflusst wird und über diese Beeinflussung die Verhältnisse insbesondere der Meridiandruck im Arbeitskreislauf im torusförmigen Arbeitsraum 4 beeinflusst wird.

Gemäß einer Weiterentwicklung wird jeder der Betriebsmittelführungskanäle- oder Räume 13 und 16 derart gestaltet, dass diese neben der Zufuhr beziehungsweise Abfuhr von Betriebsmittel zum torusförmigen Arbeitsraum 4 und auch der anderen Funktion, das heißt der Abfuhr beziehungsweise Zufuhr dienen können, das heißt somit mit mindestens einem Eintritt und/oder einem Austritt aus dem torusförmigen Arbeitsraum 4 verbunden sind. Dabei ist es unerheblich, in welchem Bereich das Betriebsmittel aus dem torusförmigen Arbeitsraum 4 austritt. Beide Betriebsmittelführungskanäle- oder Räume 13 beziehungsweise 16 sind dabei wahlweise als Zulauf oder Ablauf nutzbar, so dass auch die Durchströmungsrichtung geändert wird. Zu diesem Zweck sind zusätzliche Mittel zur wahlweisen Änderung der Durchströmungsrichtung der hydrodynamischen Kupplung 1 vorgesehen. Bezüglich der Realisierung dieser Funktion wird dabei auf die Druckschrift WO 02/18817 verwiesen.

Der offene Kreislauf 17 ist Bestandteil eines Betriebsmittelversorgungssystems 18. Dieses umfasst eine Betriebsmittelquelle 19, welche vorzugsweise in Form eines Tanks beziehungsweise Behälters 20 ausgestaltet ist und jeweils mit dem Betriebsmittelführungskanal oder -raum 13 und dem Betriebsmittelführungskanal oder -raum 16 über entsprechende Leitungsverbindungen oder Kanäle gekoppelt ist. In die jeweilige Verbindung zwischen dem Tank 20 beziehungsweise der Betriebsmittelquelle 19 und dem Betriebsmittelführungskanal oder -raum 13 beziehungsweise 16 sind dann die Mittel zur Steuerung der Drücke in beiden Leitungen angeordnet. Die Anordnung erfolgt dabei entweder nur in einer der beiden Verbindungsleitungen oder Kanäle oder aber in beiden. Die konkrete Ausgestaltung der Mittel zur Steuerung der Druckverhältnisse in beiden Räumen liegt dabei im Ermessen des zuständigen Fachmannes.

Bei der in der Figur 2 dargestellten Ausführung handelt es sich ferner um die Ausbildung einer hydrodynamischen Kupplung 1 mit Eignung des Sekundärrades 3 als Kolben 21 zur Beaufschlagung einer der hydrodynamischen Kupplung 1 zugeordneten schaltbaren Kupplung 22, welche die Funktion einer Überbrückungskupplung 23 zur mechanischen Durchkopplung zwischen Primärrad 2 und Sekundärrad 3 übernimmt. Die Überbrückungskupplung 23 umfasst dabei ein Kupplungseingangselement 24 und ein Kupplungsausgangselement 25, die entweder direkt miteinander oder über weitere Übertragungselemente in Wirkverbindung bringbar sind. Dabei kann das Kupplungsausgangselement 25 entweder wie dargestellt direkt am Sekundärrad 3 angeordnet werden oder aber einem mit diesem drehfest gekoppelten Element. Zur Realisierung der Funktion des Sekundärrades 3 als Kolben 21 ist dieses zwar in Umfangsrichtung drehfest, jedoch in axialer Richtung verschiebbar gegenüber dem Primärrad 2 gelagert. Dies erfolgt dabei beispielsweise mittels einer entsprechenden Profilverbindung 26 in Form einer Keilwellenverbindung zwischen dem Sekundärrad 3 und der Sekundärradwelle 9. Ferner denkbar ist auch eine elastische Anbindung des Sekundärrades 3 an die Sekundärradwelle 9.

Um eine Zufuhr des Betriebsmittels bei zentripetaler Durchströmung, das heißt Durchströmung über den ersten Betriebsmittelführungskanal oder -raum und das Sekundärrad 3 zum radial äußeren Bereich im torusförmigen Arbeitsraum 4 im Bereich der Trennebene T zwischen Primärrad und Sekundärrad 2, 3 und von dort in den sich im torusförmigen Arbeitsraum bildenden Arbeitskreislauf zu gewährleisten, ist es erforderlich, Pumpenrad und Turbinenrad in entsprechender Art und Weise zueinander anzuordnen und einen Spalt zwischen ihnen so zu gestalten, dass der dabei gebildete Eintrittswinkel immer eine Zufuhr in die Meridianströmung des Arbeitskreislaufes bewirkt und nicht abströmend wirkt. Dazu sind Primärrad 2 und Sekundärrad 3 in radialer Richtung mit Versatz ausgeführt, wodurch sich eine entsprechende Profilüberdeckung der Beschaufelung ergibt. Diese Profilüberdeckung ist dabei dadurch charakterisiert, dass der äußere Durchmesser $D_P$ des torusförmigen Arbeitsraumes 4 am Primärrad 2 kleiner als der äußere Durchmesser $D_T$ des torusförmigen Arbeitsraumes 4 am Sekundärrad 3 ist. Dies gilt in Analogie auch für die Innendurchmesser, das heißt die inneren Durchmesser des torusförmigen Arbeitsraumes an den entsprechenden Schaufelrädem-Primärrad 2 und Sekundärrad 3. Diese sind dabei mit $d_P$ für das Primärrad und $d_T$ für das Sekundärrad gekennzeichnet. Die Profilüberdeckung ist dabei durch folgende Beziehung gekennzeichnet:

$$100\%D_P < D_T \leq 103\%D_P$$

und

$$100\%d_P < d_t \leq 103\%d_P \,.$$

Dabei handelt es sich bei dieser Angabe um besonders vorteilhafte Bereichsauslegungen. Dabei sollte jedoch immer darauf geachtet werden, dass auch die Differenz zwischen den äußeren Durchmessern in etwa der Differenz zwischen den inneren Durchmessern zwischen den einzelnen Schaufelrädern entspricht, das heißt $(D_T - D_P)$ und $(d_t - d_p)$.

Bezüglich der Ausgestaltung der Beschaufelung der hydrodynamischen Kupplung 1, insbesondere der einzelnen Schaufelräder 2 und 3 bestehen eine Mehrzahl von Möglichkeiten. Dabei werden vorzugsweise an beiden Schaufelrädern jeweils gleiche Schaufelwinkel gewählt. Diese beschreiben dabei den Winkel zwischen dem Schaufelgrund 27 für das Primärrad 2 und 28 für das Sekundärrad 3 und einer Schaufelseite - der Schaufelvorderseite 29 für das Primärrad 2 und der Schaufelrückseite 30 für das Sekundärrad. Diese sind dabei mit $\alpha_P$ für das Primärrad 2 und $\alpha_T$ für das Sekundärrad 3 bezeichnet. Dabei sind vorzugsweise $\alpha_T = \alpha_P$. Bei Schrägbeschaufelung erfolgt die Ausrichtung in einem Winkel zwischen 50 Grad $\leq \alpha_T \leq$ 90 Grad bzw. 50 Grad $\leq \alpha_P \leq$ 90, vorzugsweise jedoch in einem Winkel zwischen 75 und einschließlich 90 Grad.

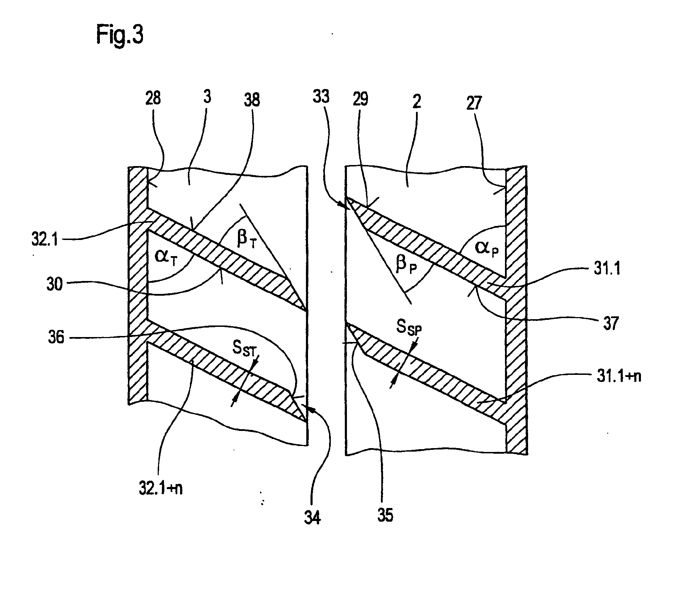

Die Wahl der Schaufeldicke $S_{ST}$ des Sekundärrades 3 und der Schaufeldicken der Beschaufelung am Primärrad $s_{SP}$ liegt im Ermessen des Fachmannes. Dies gilt auch für eine Ausführung mit Anspitzung der einzelnen Schaufeln 31.1 +n für das Primärrad und 32.1+n für das Sekundärrad 3 im Bereich der Schaufelenden 33 für das Primärrad 2 und 34 für das Sekundärrad 3. Im dargestellten Fall sind die Schaufel 31.1+n und 32.1+n angespitzt ausgeführt. Der Anspitzwinkel β der sich durch die Anspitzung beziehungsweise Anfasung ergebenden Anspitzfläche 35 beziehungsweise 36 an den Schaufelenden 33 beziehungsweise 34 von Primärrad 2 beziehungsweise Sekundärrad 3 ergibt sich dabei als Winkel zwischen dieser Fläche und der theoretisch gedachten Verlängerung der durch die Anspitzung bedingten kürzeren Seite der Schaufel der Beschaufelung von Primärrad 2 beziehungsweise Sekundärrad 3. Der Anspitzwinkel ist dabei für das Primärrad 2 mit $\beta_P$ und für das Sekundärrad 3 mit $\beta_T$ bezeichnet. Beim Primärrad entspricht dieser Winkel dem Winkel zwischen der Anspitzfläche 35 und der Schaufelrückseite 37, während der Winkel $\beta_T$ für das Sekundärrad 3 dem Winkel zwischen der Anspitzfläche 36 der Beschaufelung am Sekundärrad 3 und der Schaufelvorderseite 38 gebildet wird. Der Anspitzwinkel entspricht dabei vorzugsweise dem Schaufelwinkel. Dieser beträgt gemäß einer besonders vorteilhaften Ausgestaltung beispielsweise ca. 80 Grad. Die einzelnen Verhältnisse sind dabei in Figur 3 anhand eines Schnittes durch die Abwicklung der einzelnen Schaufelräder 2, 3 dargestellt.

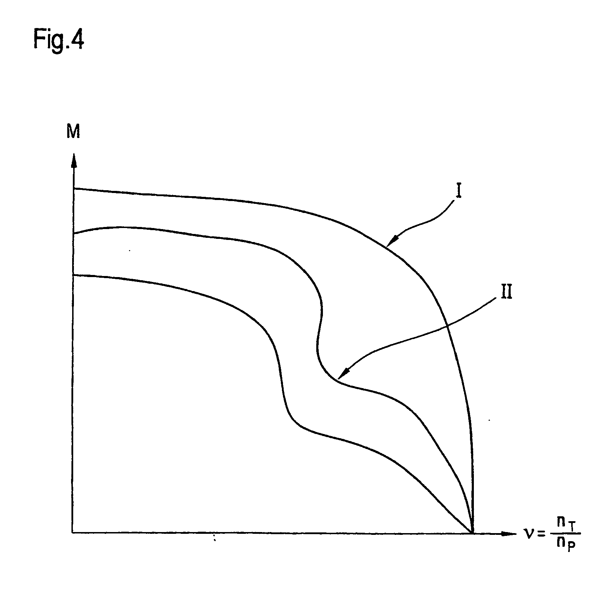

Die Bestimmung der Schaufelzahl $Z_T$ für das Sekundärrad 3 und $Z_P$ für das Primärrad 2 liegt im Ermessen des Fachmannes. Zur Vermeidung von Pulsationen bei der Momentübertragung sind die Schaufelräder jedoch mit unterschiedlicher Anzahl an Schaufeln ausgestattet. Bei Anordnung der einzelnen Schaufeln eines Schaufelrades in Umfangsrichtung im gleichen Abstand zueinander ergeben sich im Teilfüllungszustand Unstetigkeitsbereiche im Kennfeld der Leistungsübertragung, wie beispielsweise in Figur 4 verdeutlicht, die zu einer negativen Beeinfussung des Übertragungsverhaltens und damit den gewünschten Erscheinungen in der Funktion der hydrodynamischen Kupplung führen. I verdeutlicht dabei im Drehzahlverhältnis-/Drehmomentdiagramm die Ideallinie, II die Kennlinien mit Unstetigkeiten. Zur Vermeidung dieser Unstetigkeitsbereiche wird eine ungleichmäßige Schaufelaufteilung gewählt. Dazu wird in Umfangsrichtung betrachtet das Schaufelrad in mehrere, z. B. vier Quadranten aufgeteilt, wobei die einzelnen benachbart angeordneten Schaufeln innerhalb eines Quadranten in unterschiedlichen Winkeln zueinander angeordnet sind. Die Ausführung gemäß eines Quadranten kann dann auf die anderen drei entsprechend übertragen werden. Dies ist jedoch nicht zwingend erforderlich.

In Figur 1 wurde bereits auf die Möglichkeit der Optionalität einer Drosselscheibe 5 hingewiesen. Der Einbau dieser erfolgt entsprechend folgender Beziehung:

$$1 < ((D_P - d_P) / (D_P - d_d)) \le 1{,}25.$$

Bezugszeichenliste

| 1 | Hydrodynamische Kupplung |
|---|---|
| 2 | Primärrad |
| 3 | Sekundärrad |
| 4 | torusförmiger Arbeitsraum |
| 5 | Drosselscheibe |
| 6 | Anfahreinheit |
| 7 | Anfahrelement |
| 8 | Primärradschale |
| 9 | Sekundärradwelle |
| 10 | Kupplungshals |
| 11 | Außenumfang |
| 12 | Innenwand |
| 13 | Betriebsmittelführungskanal oder -raum |
| 14 | Bereich radial äußerer Abmessung |
| 15 | Spalt |
| 16 | Betriebsmittelführungskanal oder -raum |
| 17 | offener Kreislauf |
| 18 | Betriebsmittelversorgungssystem |
| 19 | Betriebsmittelquelle |
| 20 | Tank, Behälter |
| 21 | Kolben |
| 22 | schaltbare Kupplung |
| 23 | Überbrückungskupplung |
| 24 | Kupplungseingangselement |
| 25 | Kupplungsausgangselement |
| 26 | Profilverbindung |
| 27 | Schaufelgrund der Beschaufelung am Primärrad |
| 28 | Schaufelgrund der Beschaufelung am Sekundärrad |
| 29 | Schaufelvorderseite am Primärrad |
| 30 | Schaufelrückseite am Sekundärrad |
| 31 | Schaufel der Beschaufelung am Primärrad |
| 32 | Schaufel der Beschaufelung am Sekundärrad |
| 33 | Schaufelende |
| 34 | Schaufelende |
| 35 | Anspitzfläche |

36      Anspitzfläche
37      Schaufelrückseite am Primärrad
38      Schaufelvorderseite am Sekundärrad
E       Eingang der Anfahreinheit
A       Ausgang der Anfahreinheit
$D_P$    Außendurchmesser des torusförmigen Arbeitsraumes am Primärrad
$d_P$    Innendurchmesser des torusförmigen Arbeitsraumes am Primärrad
$D_T$    Außendurchmesser des torusförmigen Arbeitsraumes am Sekundärrad
$d_T$    Innendurchmesser des torusförmigen Arbeitsraumes am Sekundärrad
B       Breite des torusförmigen Arbeitsraumes in axialer Richtung
$I_S$    Spaltbreite zwischen Primärrad und Sekundärrad
$d_d$    Außendurchmesser der Drosselscheibe
$S_{SP}$  Schaufelbreite einer Schaufel am Primärrad
$s_{st}$  Schaufelbreite einer Schaufel der Beschaufelung am Sekundärrad
$\alpha_P$  Schaufelwinkel einer Schaufel der Beschaufelung am Primärrad
$\alpha_T$  Schaufelwinkel der Beschaufelung am Sekundärrad
$\beta_P$  Anspitzwinkel der Beschaufelung am Primärrad
$\beta_T$  Anspitzwinkel der Beschaufelung am Sekundärrad
$Z_T$    Anzahl der Schaufeln am Sekundärrad
$Z_P$    Anzahl der Schaufeln der Beschaufelung am Primärrad

**Patentansprüche**

1.  Hydrodynamische Kupplung (1)

    1.1 mit einem Primärrad (2) und einem Sekundärrad (3), die miteinander einen mit Betriebsmittel befüllbaren torusförmigen Arbeitsraum (4) bilden; **gekennzeichnet durch** die folgenden Merkmale:
    1.2 die Abmessungen der Kupplung (1) sind **durch** folgende Parameterbereiche charakterisiert:

    - $0,13 \leq B / D_P \leq 0,2$ für das Verhältnis der Breite B des torusförmigen Arbeitsraumes (4) im Axialschnitt zum Außendurchmesser des torusförmigen Arbeitsraumes $D_P$ am Primärrad (2);
    - $0,6 \leq d_P/D_P \leq 0,7$ für das Verhältnis des Innendurchmessers des torusförmigen Arbeitsraumes $d_P$ am Primärrad (2) zum Außendurchmesser $D_P$ des torusförmigen Arbeitsraumes (4) am Primärrad (2);
    - $230mm \leq D_P \leq 280mm$ für den Außendurchmesser $D_P$ des torusförmigen Arbeitsraumes (4) am Primärrad (2).

2.  Hydrodynamische Kupplung (1) nach Anspruch 1, **dadurch gekennzeichnet, dass** das Verhältnis zwischen der Breite B des torusförmigen Arbeitsraumes (4) zum äußeren Durchmesser $D_P$ des torusförmigen Arbeitsraumes (4) am Primärrad (2) immer kleiner beziehungsweise gleich $((1 - d_P /D_P)/2)$ entspricht.

3.  Hydrodynamische Kupplung (1) nach einem der Ansprüche 1 oder 2, **dadurch gekennzeichnet, dass** zwischen dem Primärrad (2) und dem Sekundärrad (3) eine Profilüberdeckung vorgesehen ist.

4.  Hydrodynamische Kupplung (1) nach Anspruch 3, **dadurch gekennzeichnet, dass** die Profilüberdeckung durch folgende Beziehungen zwischen den äußeren Durchmessern des Arbeitsraumes (4) am Primärrad (2) und dem Sekundärrad (3) sowie den inneren Durchmessern der beiden Schaufelräder zueinander beschreibbar ist:

$$100\% D_P < D_T \leq 103\% T_P \text{ und } 100\% d_P < d_t \leq 103\% d_P .$$

5.  Hydrodynamische Kupplung (1) nach einem der Ansprüche 1 bis 4, **dadurch gekennzeichnet, dass** der Schaufelwinkel der Schaufeln am Primärrad (2) dem Schaufelwinkel der Schaufeln am Sekundärrad (3) entspricht und in einem Winkelbereich von $50$ Grad $\leq \alpha_T \leq 90$ Grad bzw. $50$ Grad $\leq \alpha_T P \leq 90$ Grad liegt.

6.  Hydrodynamische Kupplung (1) nach einem der Ansprüche 1 bis 5, **dadurch gekennzeichnet, dass** die einzelnen Schaufeln der Schaufelräder (2, 3) im Bereich ihres Schaufelendes (33, 34) unter Bildung einer Anspitzfläche (35, 36) angefast sind, wobei der Fasenwinkel $\beta_P$ am Primärrad (2) dem Fasenwinkel $\beta_T$ am Sekundärrad (3) entspricht und die Phase am Primärrad (2) an der Schaufelrückseite und am Sekundärrad an der Schaufelvorderseite ausgebildet ist.

7.  Hydrodynamische Kupplung (1) nach einem der Ansprüche 1 bis 6, **dadurch gekennzeichnet, dass** die einzelnen Schaufeln der Beschaufelung eines Schaufelrades (2, 3) in Umfangsrichtung in ungleichen Winkelabständen zwischen zwei zueinander in Umfangsrichtung benachbarten Schaufeln angeordnet sind.

8.  Hydrodynamische Kupplung (1) nach einem der Ansprüche 1 bis 7, **gekennzeichnet durch** die folgenden Merkmale:

    8.1 mit einer, in radialer Richtung sich in den torusförmigen Arbeitsraum (4) erstreckenden Drosselscheibe (5);
    8.2 die Drosselscheibe (5) ist im Bereich des Innendurchmessers des torusförmigen Arbeitsraumes (4) einem der beiden Schaufelräder - Primärrad (2) oder Sekundärrad (3) - zugeordnet.

9.  Hydrodynamische Kupplung (1) nach Anspruch 8, **dadurch gekennzeichnet, dass** für die Auslegung der Drosselscheibe folgende Beziehung gilt:

$$1 < ((D_P - d_P) \, / \, (D_P - d_d)) \leq 1{,}25.$$

10.  Hydrodynamische Kupplung (1) nach einem der Ansprüche 1 bis 9, **gekennzeichnet durch** die folgenden Merkmale:

    10.1 mit einer drehfest mit dem Primärrad (2) gekoppelten Primärradschale (8), welche das Sekundärrad (3) in axialer Richtung und wenigstens teilweise in radialer Richtung unter Bildung eines ersten Betriebsmittelführungskanals- oder -raumes (13) umschließt;
    10.2 mit einem zweiten Betriebsmittelführungskanal oder -raum (16), welcher im Bereich des Innendurchmessers des torusförmigen Arbeitsraumes (4) oder unterhalb dessen mündet;
    10.3 der erste Betriebsmittelsführungskanal oder -raum (13) ist wenigstens als Zufuhrkanal oder -raum zum torusförmigen Arbeitsraum (4) und der zweite Betriebsmittelführungskanal oder -raum (16) ist wenigstens als Ablaufkanal- oder -raum vom torusförmigen Arbeitsraum (4) ausgebildet.

11.  Hydrodynamische Kupplung (1) nach Anspruch 10, **dadurch gekennzeichnet, dass** der erste und zweite Betriebsmittelführungskanal oder -raum (13, 16) wahlweise jeweils als Zufuhr- oder Abfuhrkanal oder -raum zum oder vom torusförmigen Arbeitsraum (4) nutzbar ist.

12.  Hydrodynamische Kupplung (1) nach einem der Ansprüche 10 bis 11, **dadurch gekennzeichnet, dass** der erste und der zweite Betriebsmittelführungskanal oder -raum (13, 16) über einen offenen Kreislauf (17) miteinander verbindbar sind.

13.  Hydrodynamische Kupplung (1) nach einem der Ansprüche 10 oder 11, **dadurch gekennzeichnet, dass** dieser ein Betriebsmittelversorgungssystem (18) zugeordnet ist.

14.  Hydrodynamische Kupplung (1) nach Anspruch 13, **gekennzeichnet durch** die folgenden Merkmale:

    14.1 mit einem ersten Anschluss zur Kopplung mit dem ersten Betriebsmittelführungskanal oder -raum (13);
    14.2 mit einem zweiten Anschluss zur Kopplung mit dem zweiten Betriebsmittelführungskanal oder -raum (16);
    14.3 mit Mitteln zur wahlweisen Änderung der Durchströmungsrichtung der hydrodynamischen Kupplung **durch** Zuweisung der Funktion des Zulaufes oder des Ablaufes der einzelnen Betriebsmittelversorgungskanäle- oder Räume (13, 16).

15.  Anfahreinheit (6)

    15.1 mit einem Eingang (E) und einem Ausgang (A);
    15.2 mit einem zwischen dem Eingang (E) und dem Ausgang (A) angeordneten Anfahrelement (7) in Form einer hydrodynamischen Kupplung (1) gemäß einem der Ansprüche 1 bis 14.

16.  Anfahreinheit (6) nach Anspruch 15, **dadurch gekennzeichnet, dass** der hydrodynamischen Kupplung (1) eine schaltbare Kupplung (22) zugeordnet ist, die parallel zu dieser angeordnet ist, wobei hydrodynamische Kupplung (1) und schaltbare Kupplung (25) mindestens getrennt schaltbar sind.

**Claims**

1.  A hydrodynamic coupling

    1.1 with a primary wheel (2) and a secondary wheel (3) which jointly form a toroidal working chamber (4) which can be filled with an operating medium; **characterized by** the following features:
    1.2 the dimensions of the coupling (1) are **characterized by** the following parameter ranges:

    - $0.13 \leq B/D_p \leq 0.2$ for the ratio of width B of the toroidal working chamber (4) in the axial section to the outside diameter of the toroidal working chamber Dp on the primary wheel (2);
    - $0.6 \leq d_p/D_p \leq 0.7$ for the ratio of the inside diameter of the toroidal working chamber dp on the primary wheel (2) to the outside diameter Dp of the toroidal working chamber (4) on the primary wheel (2);
    - $230 \, mm \leq D_p \leq 280 \, mm$ for the outside diameter $D_p$ of the toroidal working chamber (4) on the primary wheel (2).

2.  A hydrodynamic coupling (1) according to claim 1, **characterized in that** the ratio between the width B of the toroidal working chamber (4) to the outside diameter Dp of the toroidal working chamber (4) on the primary wheel (2) always corresponds to smaller than or equal to $((1-d_p/D_p)/2)$.

3.  A hydrodynamic coupling (1) according to one of the claims 1 or 2, **characterized in that** a profile covering is provided between the primary wheel (2) and the secondary wheel (3).

4.  A hydrodynamic coupling (1) according to claim 3, **characterized in that** the profile covering can be described by the following relationships between the outside diameter of the working chamber (4) on the primary wheel (2) and the secondary wheel (3) and the inside diameters of the two blade wheels with respect to one another:

$$100\%D_p < D_T \leq 103\%T_P \text{ and } 100\%d_p < d_T \leq 103\%d_P.$$

5.  A hydrodynamic coupling (1) according to one of the claims 1 to 4, **characterized in that** the blade angle of the blades on the primary wheel (2) corresponds to the blade angle of the blades on the secondary wheel (3) and lies in an angular range of 50 degrees $\leq \alpha_T \leq$ 90 degrees or 50 degrees $\leq \alpha_T P \leq$ 90 degrees.

6.  A hydrodynamic coupling (1) according to one of the claims 1 to 5, **characterized in that** the individual blades of the blade wheels (2, 3) are chamfered in the region of their blade end (33, 34) by formation of a pointed surface (35, 36), with the angle of the chamfer $\beta_P$ on the primary wheel (2) corresponding to the angle of the chamfer $\beta_T$ on the secondary wheel (3), and the chamfer on the primary wheel (2) is formed on the rear side of the blade and on the front side of the blade on the secondary wheel.

7.  A hydrodynamic coupling (1) according to one of the claims 1 to 6, **characterized in that** the individual blades of the set of blades of a blade wheel (2, 3) are arranged in the circumferential direction in unequal angular distances between two blades which are adjacent to one another in the circumferential direction.

8.  A hydrodynamic coupling (1) according to one of the claims 1 to 7, **characterized by** the following features:

    8.1 a baffle disk (5) extending in the radial direction into the toroidal working chamber (4);
    8.2 the baffle disk (5) is associated in the region of the inside diameter of the toroidal working chamber (4) to one of the two blade wheels, either primary wheel (2) or secondary wheel (3).

9.  A hydrodynamic coupling (1) according to claim 8, **characterized in that** the following relationship applies to the configuration of the baffle disk:

$$1 < ((D_p - d_p) / (D_p - d_d)) \leq 1.25$$

**10.** A hydrodynamic coupling (1) according to one of the claims 1 to 9, **characterized by** the following features:

10.1 with a primary wheel shell (8) which is coupled with the primary wheel (2) in a torsionally rigid manner and which encloses the secondary wheel (3) in the axial direction and at least partly in the radial direction by forming a first guide channel or chamber (13) for the operating medium;
10.2 with a second guide channel or chamber (16) for the operating medium which opens into the region of the inside diameter of the toroidal working chamber (4) or beneath the same;
10.3 the first guide channel or chamber (13) for the operating medium is configured at least as a supply channel or chamber to the toroidal working chamber (4) and the second guide channel or chamber (16) is configured at least as a discharge channel or chamber from the toroidal working chamber (4).

**11.** A hydrodynamic coupling (1) according to claim 10, **characterized in that** the first and second guide channel or chamber (13, 16) can be used optionally as a supply or discharge channel or chamber to or from the toroidal working chamber (4).

**12.** A hydrodynamic coupling (1) according to one of the claims 10 to 11, **characterized in that** the first and the second guide channel or chamber (13, 16) for the operating medium can be connected with each other via an open circulation (17).

**13.** A hydrodynamic coupling (1) according to one of the claims 10 to 11, **characterized in that** the same is associated with an operating medium supply system (18).

**14.** A hydrodynamic coupling (1) according to claim 13, **characterized by** the following features:

14.1 with a first connection for coupling with the first guide channel or chamber (13) for the operating medium;
14.2 with a second connection for coupling with the second guide channel or chamber (16) for the operating medium;
14.3 with means for optionally changing the direction of flow through the hydrodynamic coupling by assigning the function of inlet or outlet of the individual supply channels or chambers (13, 16) for the operating medium.

**15.** A starting unit (6)

15.1 with an input (E) and an output (A);
15.2 with a starting element (7) arranged between the input (E) and the output (A) in the form of a hydrodynamic coupling (1) according to one of the claims 1 to 14.

**16.** A starting unit (6) according to claim 15, **characterized in that** a switchable clutch (22) is associated with the hydrodynamic coupling, which clutch is arranged parallel to the same, with the hydrodynamic coupling (1) and the switchable clutch (25) being at least separately switchable.

**Revendications**

**1.** Accouplement hydrodynamique (1)

1.1 avec une roue primaire (2) et une roue secondaire (3), qui forment ensemble un espace de travail toroïdal (4) pouvant être rempli de fluide de travail,
**caractérisé en ce que** :
1.2 les dimensions de l'accouplement (1) sont **caractérisées par** les plages de paramètres suivantes :

- $0,13 \leq B / D_P \leq 0,2$ pour le rapport entre la largeur B de l'espace de travail toroïdal (4) en coupe axiale et le diamètre extérieur de l'espace de travail toroïdal $D_P$ au niveau de la roue primaire (2) ;
- $0,6 \leq d_p / D_P \leq 0,7$ pour le rapport entre le diamètre intérieur de l'espace de travail toroïdal dp au niveau de la roue primaire (2) et le diamètre extérieur $D_P$ de l'espace de travail toroïdal (4) au niveau de la roue primaire (2) ;
- 230 mm ≤ $D_P$ ≤ 280 mm pour le diamètre extérieur $D_P$ de l'espace de travail toroïdal (4) au niveau de la roue primaire (2).

2. Accouplement hydrodynamique (1) selon la revendication 1, **caractérisé en ce que** le rapport entre la largeur B de l'espace de travail toroïdal (4) et le diamètre extérieur $D_P$ de l'espace de travail toroïdal (4) au niveau de la roue primaire (2) est toujours inférieur ou égal à $((1 - d_p /D_P)/2)$.

3. Accouplement hydrodynamique (1) selon l'une quelconque des revendications 1 ou 2, **caractérisé en ce qu'**il est prévu entre la roue primaire (2) et la roue secondaire (3) une couverture profilée.

4. Accouplement hydrodynamique (1) selon la revendication 3, **caractérisé en ce que** la couverture profilée peut être décrite par les relations suivantes entre le diamètre extérieur de l'espace de travail (4) au niveau de la roue primaire (2) et de la roue secondaire (3) et entre les diamètres intérieurs des deux roues à aubes : $100\%D_P < D_T ≤103\%T_P$ et $100\%d_p < d_t ≤103\%d_p$.

5. Accouplement hydrodynamique (1) selon l'une quelconque des revendications 1 à 4, **caractérisé en ce que** l'angle des aubes de la roue primaire (2) correspond à l'angle des aubes de la roue secondaire (3) et se situe dans une plage d'angles de $50° ≤ α_T ≤ 90°$ ou $50° ≤ α_TP ≤ 90°$.

6. Accouplement hydrodynamique (1) selon l'une quelconque des revendications 1 à 5, **caractérisé en ce que** les aubes des roues à aubes (2, 3) sont biseautées au niveau de leur extrémité (33, 34) en formant une surface pointue (35, 36), l'angle de biseau $β_P$ au niveau de la roue primaire (2) correspondant à l'angle de biseau $β_T$ au niveau de la roue secondaire (3) et le chanfrein au niveau de la roue primaire (2) est formé sur la face arrière des aubes et celui au niveau de la roue secondaire sur la face avant des aubes.

7. Accouplement hydrodynamique (1) selon l'une quelconque des revendications 1 à 6, **caractérisé en ce que** les aubes de l'ensemble d'aubes d'une roue à aubes (2, 3) sont disposées, dans le sens de la circonférence, à des écarts angulaires différents entre deux aubes voisines dans le sens de la circonférence.

8. Accouplement hydrodynamique (1) selon l'une quelconque des revendications 1 à 7, **caractérisé en ce qu'**il comporte les éléments suivants :

   8.1 avec un disque d'étranglement (5) s'étendant dans le sens radial dans l'espace de travail toroïdal (4) ;
   8.2 le disque d'étranglement (5) est associé, au niveau du diamètre intérieur de l'espace de travail toroïdal (4), à l'une des deux roues à aubes (roue primaire (2) ou roue secondaire (3)).

9. Accouplement hydrodynamique (1) selon la revendication 8, **caractérisé en ce que** pour le dimensionnement du disque d'étranglement, on a la relation suivante :

$$1 < ((D_P - d_p) / (D_P - d_d)) ≤ 1,25.$$

10. Accouplement hydrodynamique (1) selon l'une quelconque des revendications 1 à 9, **caractérisé en ce qu'**il comporte les éléments suivantes :

   10.1 avec une coquille de roue primaire (8) solidaire en rotation de la roue primaire (2), qui entoure la roue secondaire (3) dans le sens axial et au moins partiellement dans le sens radial en formant un premier canal ou espace de guidage du moyen de fonctionnement (13) ;
   10.2 avec un deuxième canal ou espace de guidage du moyen de fonctionnement (16), qui débouche au niveau de l'espace intérieur de l'espace de travail toroïdal (4) ou en dessous de celui-ci ;
   10.3 le premier canal ou espace de guidage du moyen de fonctionnement (13) est conformé au moins comme un canal ou un espace d'arrivée vers l'espace de travail toroïdal (4) et le deuxième canal ou espace de guidage du moyen de fonctionnement (16) est conformé comme un canal ou espace de sortie de l'espace de travail toroïdal (4).

11. Accouplement hydrodynamique (1) selon la revendication 10, **caractérisé en ce que** le premier canal ou espace de guidage du moyen de fonctionnement et le deuxième (13, 16) peuvent être utilisés chacun au choix comme canal d'arrivée ou de sortie de l'espace de travail toroïdal (4).

**12.** Accouplement hydrodynamique (1) selon l'une quelconque des revendications 10 à 11, **caractérisé en ce que** le premier canal ou espace de guidage du moyen de fonctionnement et le deuxième (13, 16) peuvent être reliés entre eux par un circuit ouvert (17).

**13.** Accouplement hydrodynamique (1) selon l'une quelconque des revendications 10 ou 11, **caractérisé en ce qu'**il est associé à un système d'alimentation en moyens de fonctionnement (18).

**14.** Accouplement hydrodynamique (1) selon la revendication 13, **caractérisé en ce qu'**il comporte les éléments suivants :

14.1. avec un premier raccord pour le couplage avec le premier canal ou espace de guidage du moyen de fonctionnement (13) ;
14.2 avec un deuxième raccord pour le couplage avec le deuxième canal ou espace de guidage du moyen de fonctionnement (16) ;
14.3 avec des moyens pour le changement sélectif du sens d'écoulement dans l'accouplement hydrodynamique par attribution de la fonction d'arrivée ou de sortie à chaque canal ou espace de guidage du moyen de fonctionnement (13, 16).

**15.** Unité de démarreur (6),

15.1 avec une entrée (E) et une sortie (A) ;
15.2 avec un élément de démarreur (7) disposé entre l'entrée (E) et la sortie (A) et prenant la forme d'un accouplement hydrodynamique (1) selon l'une quelconque des revendications 1 à 14.

**16.** Unité de démarreur (6) selon la revendication 15, **caractérisée en ce que** l'accouplement hydrodynamique (1) est associé à un accouplement embrayable (22) qui est disposé parallèlement à celui-ci, l'accouplement hydrodynamique (1) et l'accouplement embrayable (25) pouvant être actionnés au moins séparément.

# Fig.1

Fig.2

## Fig.3

Fig.4